Europäisches Patentamt

European Patent Office

Office européen des brevets

(19)

(11) **EP 1 560 037 A2**

(12) # DEMANDE DE BREVET EUROPEEN

(43) Date de publication:
**03.08.2005 Bulletin 2005/31**

(51) Int Cl.7: **G01S 1/00**, G01S 5/00

(21) Numéro de dépôt: **05290168.3**

(22) Date de dépôt: **24.01.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **28.01.2004 FR 0450161**
**15.09.2004 FR 0409751**

(71) Demandeur: **ALCATEL**
**75008 Paris (FR)**

(72) Inventeur: **Monnerat, Michel**
**31000 Toulouse (FR)**

(74) Mandataire: **Hedarchet, Stéphane et al**
**Compagnie Financiere Alcatel,**
**DPI,**
**54 rue la Boétie**
**75411 Paris Cedex 08 (FR)**

(54) **Procédé de factorisation de datation de pseudo distance dans un contexte d'assisted GNSS**

(57)     Procédé de calcul de position d'un mobile, dans lequel :

- un serveur de données d'assistance fournit une aide à la résolution de la position mobile,
- le mobile comporte des moyens de communication avec le serveur par l'intermédiaire d'un réseau cellulaire, ledit mobile comprenant des moyens de réception de signaux de positionnement provenant d'un système de positionnement par satellites (GPS, GNSS) utilisant une technique d'accès à spectre étalé,

le procédé comporte :

- suite à la réception des signaux de positionnement, le mobile envoie au serveur un ensemble de phases de code correspondant aux satellites acquis, ces phases de code étant datées par une seule information de date correspondant à l'heure d'émission d'une des phases de code,
- le serveur déduit de ces informations les heures d'émission correspondant à ces phases de code ainsi que les pseudo-distances.
- le serveur résout la position.

FIG_2

EP 1 560 037 A2

# EP 1 560 037 A2

**Description**

La présente invention concerne un procédé de calcul de position d'un dispositif mobile basé sur :

- la connaissance de phases de codes d'étalement de plusieurs satellites en vue,
- la connaissance d'une référence horaire précise ou approchée correspondant à la mesure de ces phases de code,
- la reconstitution des pseudo-distances à partir de la référence horaire, d'une position approximative du dispositif mobile à positionner, ainsi que des phases de code.

Dans le domaine de la téléphonie mobile, il s'avère de plus en plus nécessaire de pouvoir localiser les dispositifs-téléphones mobiles.

Pour cela, il est connu d'associer, au sein de ce type de dispositifs mobiles comportant usuellement un récepteur de radiotéléphonie cellulaire, du type téléphone mobile GSM (Global System for Mobile communications), un récepteur GNSS (Global Navigation Satellite System) tel qu'un récepteur du type GPS (Global Positioning System), GLONASS ou GALILEO par lequel le dispositif mobile capte des émissions en provenance de satellites pour connaître sa position. De cette manière, en cas d'accident de la circulation par exemple ou pour tout autre besoin de positionnement, le dispositif mobile peut calculer et émettre sa position.

La détermination de la position d'un tel récepteur peut se faire de la manière suivante : une pluralité de satellites émet en permanence un signal daté à destination du récepteur. Le récepteur synchronisé sur l'horloge des satellites peut alors mesurer le temps de propagation de ce signal et en déduire une distance le séparant d'un satellite particulier. A partir de trois satellites, un tel récepteur est capable d'effectuer une triangulation pour déterminer sa position. Chaque mesure de temps de propagation représente le rayon d'une sphère centrée sur un satellite particulier, le récepteur étant situé sur cette sphère. Avec deux mesures de distance, la position d'un récepteur est sur un cercle formé par l'intersection de deux sphères. Une troisième mesure simultanée réduit l'intersection à deux points, dont un est très éloigné dans l'espace et est aisément isolé.

Toutefois, l'horloge du récepteur est affectée d'un biais $\Delta T$ car elle n'est pas totalement synchrone du système GPS. En effet, les horloges atomiques des satellites GPS ont un niveau de précision très élevé mais la précision du récepteur GPS, plus rudimentaire, est fatalement beaucoup moins précise. Ce biais $\Delta T$ d'horloge est donc la différence de temps entre l'horloge du récepteur et l'horloge des satellites et peut atteindre plusieurs secondes. Il se traduit par une erreur de mesure de temps de propagation des signaux GPS et, par la même, par une erreur $c.\Delta T$ sur les distances satellite-récepteur, où $c$ est la vitesse de la lumière. Cette erreur se retrouve sur toutes les distances mesurées par le récepteur. Comme les distances ne sont pas parfaites puisqu'elles sont entachées d'un biais de temps, elles sont appelées pseudo-distances. Le biais de temps, a priori inconnu, doit alors être déterminé.

Il existe donc une quatrième inconnue en trois dimensions (trois satellites) et il est nécessaire de mesurer au moins une distance supplémentaire, donc de disposer d'au moins quatre satellites, pour résoudre un système de quatre équations à quatre inconnues.

Le signal émis par chaque satellite est un signal pseudo aléatoire modulé en phase ; le récepteur GPS doit ensuite faire l'acquisition de ce signal. Le satellite et le récepteur émettent tous deux au même instant (instant réglé sur l'horloge générale du système GPS) le signal pseudo aléatoire (le récepteur en génère une réplique). Le récepteur retarde ensuite le début de cette émission jusqu'à ce que son signal se superpose avec celui provenant du satellite. La détermination de ce retard se fait par une technique de corrélation des deux signaux. La valeur de ce retard est ainsi le temps mis par le signal pour se propager du satellite jusqu'à l'utilisateur. Ce type de mesure demande une immense précision (meilleure que 100 nanosecondes) puisque le temps mis par le signal pour effectuer un tel trajet est de l'ordre de 1/20ème de seconde. Toutefois, comme l'horloge du récepteur GPS n'est jamais totalement synchronisée sur celle des satellites, le récepteur va donc devoir constamment ajuster son horloge par approximations successives afin de parvenir à la corrélation maximale des deux signaux. L'acquisition du signal nécessite donc un balayage en temps très important par le récepteur.

Dans un contexte d'"Assisted-GPS" (Assisted Global Positioning System), le processus de calcul de position met en oeuvre un récepteur mobile capable de recevoir et traiter des signaux GNSS ainsi que de communiquer avec un réseau cellulaire, et un serveur de données d'assistance en charge de diffuser des données permettant d'aider les traitements des signaux GNSS réalisés dans le mobile. Un des modes de fonctionnement, connu sous le nom de "MS-Assisted" (MS pour "Mobile Station" en anglais ou station mobile), consiste à ce que le serveur diffuse des données d'aide à la mesure de pseudo-distances sur les signaux GPS, ces mesures étant alors renvoyées vers le serveur qui calcule la position. L'objet d'un tel mode de fonctionnement est de :

- minimiser la quantité de données d'assistance,
- diminuer le seuil de fonctionnement (en terme de rapport signal sur bruit) du récepteur,
- diminuer la puissance de calcul nécessaire au traitement des signaux GNSS.

En effet l'idée maîtresse de l'"Assisted GPS" ou "Assisted-GNSS" consiste à :

- éviter au récepteur de démoduler les éphémérides des satellites contenus dans les signaux provenant des satellites, ce qui favorise le temps nécessaire au calcul du premier point ainsi que le seuil de fonctionnement,
- fournir au récepteur une prélocalisation, une idée de l'heure et de l'effet Doppler des satellites, de manière également à accélérer le fonctionnement.

Néanmoins, dans ce mode de fonctionnement, typiquement appelé "MS-Assisted", le mobile doit renvoyer vers le serveur les pseudo-distances.

Dans le but de minimiser le trafic et parce que la position du mobile est a priori connue à l'incertitude de la taille de la cellule près, il est possible de ne renvoyer qu'une information de phase de code d'étalement. Typiquement, dans le cadre du GPS SPS (Standard Positioning Service), le code d'étalement ayant une périodicité de 1ms, le mobile renvoie, vers le serveur, les mesures de position du début d'une longueur de code d'étalement dans une milliseconde données généralement référencée par rapport au début d'une milliseconde heure système GPS. L'heure système est alors utilisée pour en déduire par le serveur la position des satellites au moment de l'émission du signal permettant alors au serveur de trianguler la position de l'utilisateur.

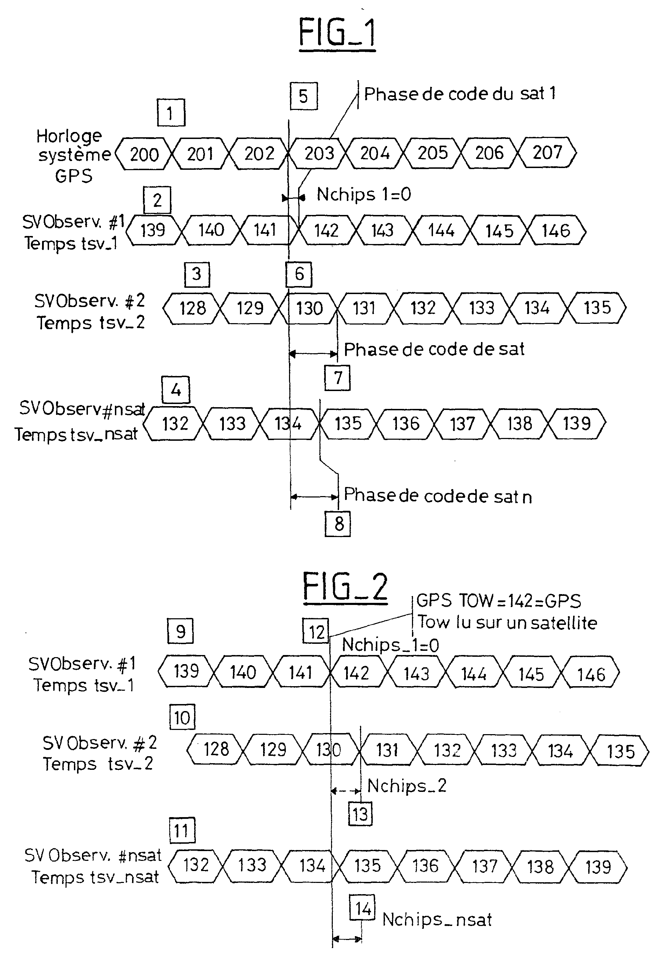

Le mode de fonctionnement le plus immédiat visant à une économie de traitement de la part du récepteur mobile est représenté sur la figure 1. Supposons que le mobile ait accès au temps du système de navigation, en l'occurrence ici représenté comme exemple celui du GPS sous la référence 1. Plusieurs méthodes peuvent être mises en place pour y parvenir :

- entretien du temps sur une horloge locale précise,
- synchronisation sur une source externe elle même synchronisée sur GPS.

C'est le cas lorsque le récepteur est connecté à un réseau mobile synchronisé sur le GPS.

Pour se positionner, le récepteur doit mesurer la distance qui le sépare de chaque satellite en vue. La mesure de distance se fait par multiplication de la différence entre la date d'émission et la date de réception du signal provenant du satellite. Pour ce faire le signal satellitaire enferme une information de datation ("Time of Week" ou TOW). Cette information de datation est contenue dans un message de date qui a une périodicité de quelques secondes, typiquement de 6 secondes dans le GPS. L'information de datation est relayée à une plus courte répétitivité par la structure même du signal et plus précisément par les répétitions des codes d'étalement (dans la suite, dans un souci de concision, le code d'étalement est dénommé code). Cette information prise indépendamment de l'information de date contenue dans le message de navigation est ambiguë car se répète avec une certaine périodicité. Cette structure est représentée en 1. Dans le cas de GPS L1, les codes d'étalements ont une répétitivité de 1ms. Ils sont représentés respectivement sous la référence 2 pour un signal reçu d'un premier satellite SV Observ. #1 (pour "Satellite Visible Observé #1), 3 pour un signal reçu d'un deuxième satellite SV Observ. #2 (pour "Satellite Visible Observé #2), et 4 pour un signal reçu d'un nième satellite SV Observ. #nsat (pour "Satellite Visible Observé #nsat).

Dans le cas d'assistance représentée en figure 1, i.e. où le mobile a accès à une source de synchronisation externe (référence 1, horloge système GPS), il n'est pas nécessaire pour résoudre le positionnement de lire la date d'émission du signal TOW sur le message. Il suffit en effet de mesurer la phase de code de chaque satellite i.e. de mesurer la durée entre le début d'une période de code à réception, référencé de 6 à 8 (mesurée en nombre de bribes ou chips en anglais) et la transition de milliseconde sur l'échelle des temps GPS (référence 1).

La connaissance :

- d'une prélocalisation,
- la date GPS à laquelle est faite la mesure,

permet :

- de calculer la position approximative des satellites au moment de l'émission du signal,
- de déduire la distance approximative utilisateur-satellite,

et par conséquent lever l'ambiguïté à 1 ms sur les dates d'émissions.

A l'issue de ce processus, la mesure de distance satellite-utilisateur est connue sans ambiguïté.

La quantité d'information transmise est alors réduite car une seule référence horaire heure de réception.

Ce dispositif est particulièrement attractif lorsque le mobile à accès au temps GPS, typiquement dans un réseau de téléphonie mobile synchronisé sur le GPS, type IS95. Ce n'est pas le cas dans un réseau de téléphonie asynchrone de type GSM. En réseau GSM, l'heure système GPS peut être retrouvée en lisant sur le message GPS reçu le champ "Time of Week" (TOW) sur les satellites, mais cela présente plusieurs inconvénients :

- cela oblige le récepteur mobile à démoduler un message GPS, d'où un impact sur le temps de calcul du point,
- la démodulation des données demande une puissance du signal reçu plus élevée que la simple détection d'un début de code.

Un autre moyen pourrait être d'entretenir par une horloge locale le temps GPS au niveau du mobile, mais cela suppose d'avoir eu accès une première fois à l'information pour recaler l'horloge locale. D'autre part, l'horloge locale des récepteurs étant de qualité restreinte, une erreur de plusieurs dizaines de ms peut apparaître sur cette datation, ce qui entraîne une erreur au niveau du serveur lors du calcul de la position des satellites et par suite une erreur sur la résolution de la position de l'utilisateur.

La présente invention propose à cet effet un procédé permettant de minimiser la complexité de recherche de synchronisation sur le GPS.

Dans une première implémentation, il est proposé de repérer les mesures de phases de code, non plus par rapport à la date du système GPS, mais par rapport à la date reçue dans un signal GPS particulier. L'avantage de ce procédé est de minimiser le nombre de démodulation de TOW. En effet, pour cela, il suffit de n'identifier la date de transition de code que sur un seul signal reçu, en d'autres termes, il suffit de ne démoduler qu'un signal reçu. Les avantages sont alors :

- une minimisation de la charge de calcul pour le mobile,
- un niveau requis de puissance de réception des satellites bien inférieur à celui que demanderait une démodulation de tous les TOW.

L'invention a donc pour objet un procédé de calcul de position (ou de point) d'un dispositif mobile, le procédé mettant en oeuvre :

- un serveur de données d'assistance pour fournir une aide à la résolution du point du dispositif mobile,
- ledit dispositif mobile comportant des moyens de communication avec le serveur par l'intermédiaire d'un réseau de radio-téléphonie cellulaire, ledit dispositif comprenant des moyens de réception de signaux de positionnement provenant d'un système de positionnement par satellites (GPS, GNSS),

le procédé comportant les étapes suivantes :

- suite à la réception des signaux de positionnement, le dispositif envoie au serveur un ensemble de phases de code correspondant aux satellites acquis, ces phases de code étant datées par une seule information de date correspondant à l'heure d'émission d'une des phases de code,
- le serveur déduit de ces informations les heures d'émission correspondant à ces phases de code ainsi que les pseudo-distances,
- le serveur résout le point.

L'invention a également pour objet un procédé de calcul de position (ou de point) d'un dispositif mobile, le procédé mettant en oeuvre :

- un serveur de données d'assistance pour fournir une aide à la résolution du point du dispositif mobile,
- ledit dispositif mobile comportant des moyens de communication avec le serveur par l'intermédiaire d'un réseau de radio-téléphonie cellulaire, ledit dispositif comprenant des moyens de réception de signaux de positionnement provenant d'un système de positionnement par satellites (GPS, GNSS),

le procédé comportant les étapes suivantes :

- ledit dispositif mobile envoie au serveur un ensemble de phases de code correspondant aux satellites acquis, ces phases de code étant mesurées par rapport au début de tranches de milliseconde entretenues par une horloge locale, les phases de code étant datées par rapport à une heure d'émission,
- le serveur déduit de ces phases de code et de l'heure d'émission associée les pseudo-distances,
- le serveur calcule la position dudit dispositif mobile.

L'invention a également pour objet un procédé de calcul de position (ou de point) d'un dispositif mobile, ledit dispositif comprenant des moyens de réception de signaux de positionnement provenant d'un système de positionnement par satellites (GPS, GNSS),

caractérisé en ce que, pour éviter de lire la date d'émission $T_e$ sur les signaux de positionnement, il est effectué une minimisation, par une technique non linéaire, de la fonction suivante :

$$f(X_u, Y_u, Z_u, \Delta T, T_e) = \sum_{ksat=1}^{N_{sat}} \left( \begin{array}{l} \sqrt{(X_s(T_e, k_{sat}) - X_u)^2 + (Y_s(T_e, k_{sat}) - Y_u)^2 + (Z_s(T_e, k_{sat}) - Z_u)^2} \\ -\rho_{ksat} - \Delta T \end{array} \right)^2$$

où Xu,Yu,Zu représente la position du dispositif mobile,

$\Delta$T représente l'erreur d'horloge commise sur la mesure de pseudo-distance,

$T_e$ représente la date d'émission des signaux de positionnement.

Selon un mode de réalisation, l'étape de minimisation de ladite fonction $f$ s'établit de manière symétrique sur la date de réception $T_r$ des signaux de positionnement en lieu et place de la date d'émission $T_e$.

Selon un mode de réalisation, ladite étape de minimisation est réalisée par des moyens de calcul du dispositif mobile.

Selon un mode de réalisation, ledit procédé mettant en oeuvre :

- un serveur de données d'assistance pour fournir une aide à la résolution du point du dispositif mobile,
- ledit dispositif mobile comportant des moyens de communication avec le serveur par l'intermédiaire d'un réseau de radio-téléphonie cellulaire,

l'étape de minimisation dudit procédé est réalisée par des moyens de calcul du serveur.

L'invention et les avantages qui en découlent apparaîtront plus clairement à la lecture de la description suivante des modes de réalisation préférés, donnée purement à titre d'exemples non-limitatifs, par référence aux dessins annexés dans lesquels :

- la figure 1, déjà décrite, est relative à la datation standard des phases de code,
- la figure 2 est relative à un mode de réalisation de codage des informations du mobile vers le serveur,
- les figures 3 et 4 sont relatives aux mesures faites sur le champ TOW avec des émissions identiques pour tous les satellites.

La figure 2 illustre le procédé selon un premier mode de réalisation de l'invention. Un premier signal provenant d'un premier satellite est acquis (référence 9). La datation des phases de code sur ce premier signal 12 est effectuée par démodulation du TOW. Une référence horaire en est alors déduite. La mesure des phases de code des autres signaux reçus est alors faite par rapport à cette référence horaire respectivement en 13 et 14.

Ledit procédé met en oeuvre les éléments suivants :

- au moins un satellite de radio-navigation,
- au moins un dispositif mobile,
- au moins un serveur d'assistance pour l'amélioration de l'acquisition de données satellitaires par le dispositif mobile,

ledit procédé comportant les étapes suivantes :

- réception par le dispositif mobile des données satellitaires,
- estimation par le dispositif mobile des phases de code des signaux GPS (ou par extension GNSS),
- datation des phases de code par l'heure d'émission par rapport à l'un des satellites, typiquement le plus fort en vue,
- transmission vers le serveur desdites phases de code et de la datation,
- estimation par le serveur des pseudo-distances associées à chacune des phases de codes.

Ledit procédé d'estimation étant également caractérisé en ce que : le serveur, par la connaissance de la position du mobile obtenue par une information du réseau, position de la cellule de base par exemple, en déduit une datation d'émission des phases de code non concernées par la datation transmise dans le message d'assistance.

Concrètement dans l'exemple de la figure 2, le pivot de datation est pris sur le satellite 1. Le message renvoyé au serveur est alors constitué par :

TOW : heure d'émission extraite du message satellite 1 dans la liste suivante, TOW est un nombre entier de ms
Code phase satellite 1 = 0
Code phase satellite 2, avec comme origine la transition de code du satellite 1, compris entre 0 et 1024 chips
...
Code phase satellite n, avec comme origine la transition de code du satellite 1, compris entre 0 et 1024 chips

Le serveur a connaissance des éphémérides des satellites. Les étapes de calcul au niveau du serveur sont alors les suivantes :

- calcul des positions des satellites à l'heure TOW référencée dans le message provenant du mobile,
- calcul des distances $d_{TOW}(k_{sat}, MS)$ séparant le satellite $k_{sat}$ de la position à priori du mobile (position approximative obtenue par information de la cellule) à la date TOW.
- estimation du temps de trajet $t_{TOW}(k_{sat}, MS) = d_{TOW}(k_{sat}, MS)/c$ où c est la vitesse de la lumière.
- application des différentes corrections : $\hat{t}_{OW}(k_{sat}, MS) = t_{TOW}(k_{sat}, MS) - \Delta b_{Ksat} - \Delta l_{ksat}$, où $\Delta b_{Ksat}$ correspond à la correction d'horloge du satellite ksat et $\Delta l$ correspond à la somme des corrections ionosphérique et troposphérique.
- estimation de l'heure d'émission de chaque phase de code adressée dans la liste $T_{Emission}(k\_sat) = TOW - E[\hat{t}_{TOW}(k_{sat}, MS) - \hat{t}_{TOW}(1, MS)]$ où $E[.]$ désigne la partie entière.
- levée d'ambiguïté :

$$\mathbf{si}\quad Frac\left[\widetilde{t}_{TOW}(k_{sat}, MS) - \widetilde{t}_{TOW}(1, MS)\right] - \frac{\left[code\_phase(k_{sat}) - code\_phase(1)\right]}{Rc} > \frac{100}{Rc},$$

où Rc
est le rythme chip (1.023Mchips/s dans le cas de GPS), alors $T_{emission}(k\_sat) = T_{emission}(k\_sat) - 1ms$,

$$\mathbf{si}\quad Frac\left[\widetilde{t}_{TOW}(k_{sat}, MS) - \widetilde{t}_{TOW}(1, MS)\right] - \frac{\left[code\_phase(k_{sat}) - code\_phase(1)\right]}{Rc} < -\frac{100}{Rc},$$

où Rc est le rythme chip (1.023Mchips/s dans le cas de GPS), alors $T_{emission}(k\_sat) = T_{emission}(k\_sat) + 1ms$,

- estimations des pseudodistances :

$$\rho(k\_sat) = \left[\frac{code\_phase(k_{sat})}{Rc} + E\left[\widetilde{t}_{TOW}(k_{sat}, MS) - \widetilde{t}_{TOW}(1, MS)\right] * 10^{-3}\right] * c$$

- résolution standard de la position du mobile en résolvant le système suivant :

$$\|Pos\_sat(k_{sat}, T_{Emis\,sin}(ksat) - Pos\_MS\| = \rho(k\_sat) + c\Delta Clock$$

où $\Delta Clock$ est l'inconnue d'horloge.

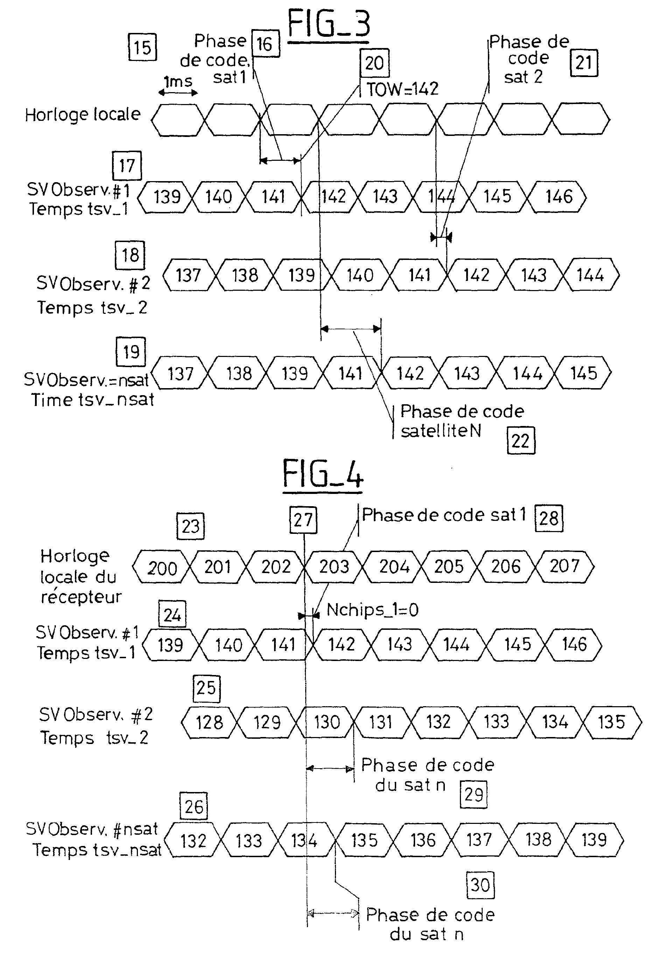

Grâce à l'invention, dans un réseau asynchrone du type GSM, il est possible au serveur de données d'assistance en mode "MS-Assisted" de résoudre la position du mobile sans commettre aucune erreur et tout en ne transmettant dans le sens "mobile vers serveur" qu'une seule référence de temps en multiple de ms et un ensemble de phases de code.
Avantageusement, le dispositif tire partie de la connaissance, côté serveur des éphémérides des satellites et de la position approximative du mobile de sorte que le mobile n'a, à aucun moment, besoin de connaître ces informations.
La présente invention peut aussi être mise en oeuvre, de manière légèrement différente, en rapportant au serveur une mesure de phases de code par rapport au début de tranche de milliseconde entretenue sur une horloge locale. Le champ TOW désignant bien l'heure d'émission des débuts de chaque période de code sur lequel la mesure est faite, comme l'illustre la figure 3. L'horloge locale 15 du récepteur sert de référence horaire. Les périodes de code de chaque satellite en visibilité (SV pour "Satellite Visible") sont représentée de 17 à 19. Les mesures effectuées par le récepteur GPS consiste à mesurer les phases de code des périodes de codes émises de manière synchrone sur chaque satellite. Ainsi, la mesure renvoyée par le récepteur vers le mobile correspond à la date d'émission (exemple 142ms sur la figure 3, sous la référence 20) et les durées écoulées entre le début de chaque période et la transition de milliseconde de l'horloge locale, référencée respectivement 16 pour le satellite 1, 21 pour le satellite 2, 22 pour le satellite N.

La résolution du point se fait alors naturellement car les débuts de période de code correspondent tous à la même heure d'émission, mais ne sont naturellement pas reçu en même temps. Le serveur par un calcul similaire au précédent estime la différence en nombre de millisecondes à ajouter à chaque phase de code pour en déduire les pseudo-distances.

Une seconde mise en oeuvre visant à réduire le besoin de démodulation de l'information d'heure d'émission des signaux et par conséquent visant à limiter les traitements au niveau récepteur est proposée dans la suite. Le mode opératoire est représenté à la figure 4. Une information d'horloge est utilisée par le récepteur 23. Cette information n'est pas nécessairement synchrone du système GPS. Le récepteur mesure les phases de code des satellites en visibilité par rapport à un front de milliseconde de l'information de synchronisation 28 à 30 respectivement pour les satellites 1 à N. L'information déduite de ces mesures est la suivante :

TOW : Date de réception mesurée sur une horloge interne

Code phase satellite 1, avec comme origine la transition de milliseconde de la référence d'horloge interne du récepteur, compris entre 0 et 1024 chips

Code phase satellite 2, avec comme origine la transition de milliseconde de la référence d'horloge interne du récepteur, compris entre 0 et 1024 chips

...

Code phase satellite n, avec comme origine la transition de milliseconde de la référence d'horloge interne du récepteur, compris entre 0 et 1024 chips

Les pseudo-distances sont alors calculées de la même manière que présenté dans la première mise en oeuvre

Classiquement, il est connu que la résolution de la position utilisateur est donnée par la résolution du système suivant :

$$\begin{cases} d(Utilisateur, Satellite_1(T_E)) = \rho_1 + c\Delta T \\ d(Utilisateur, Satellite_2(T_E)) = \rho_2 + c\Delta T \\ \\ \\ d(Utilisateur, Satellite_{Nsat}(T_E)) = \rho_{Nsat} + c\Delta T \end{cases}$$

où

d(x,y) désigne la distance entre x et y,

$\rho_k$ désigne la pseudo-distance entre le satellite k en visibilité et l'utilisateur,

$\Delta T$ est l'erreur d'horloge sur la mesure de pseudo-distance.

Classiquement, la date d'émission $T_e$ est connue parfaitement par lecture sur le signal satellitaire. Le système d'équations est alors classiquement linéarisé pour se ramener à un système linéaire :

$$\begin{bmatrix} \dfrac{X_s(T_e,1)-X_u}{d(T_e,1)} & \dfrac{Y_s(T_e,1)-Y_u}{d(T_e,1)} & \dfrac{Z_s(T_e,1)-Z_u}{d(T_e,1)} & 1 \\ \\ \dfrac{X_s(T_e,N\_sat)-X_u}{d(T_e,N\_sat)} & \dfrac{Y_s(T_e,N\_sat)-Y_u}{d(T_e,N\_sat)} & \dfrac{Z_s(T_e,N\_sat)-Z_u}{d(T_e,N\_sat)} & 1 \end{bmatrix} \begin{bmatrix} \delta X_u \\ \delta Y_u \\ \delta Z_u \\ \Delta T \end{bmatrix} = \begin{bmatrix} \rho_1 - d(T_e,1) \\ ... \\ \rho_{Nsat} - d(T_e,N_{sat}) \end{bmatrix}$$

où

$$d(T_e, k_{sat}) = \sqrt{(X_s(T_e) - X_u)^2 + (Y_s(T_e) - Y_u)^2 + (Z_s(T_e) - Z_u)^2}$$

Dans le cas présent, le mobile ne lit pas la date d'émission sur le signal satellitaire. Cette date d'émission devient donc une inconnue.

A cet effet, la présente invention propose également une méthode pour résoudre la date d'émission comme une inconnue supplémentaire. Le problème comporte donc 5 inconnues : $(X_u, Y_u, Z_u, \Delta T, T_e)$. Pour résoudre le problème, il est proposé de minimiser la fonction suivante :

$$f(X_u, Y_u, Z_u, \Delta T, T_e) = \sum_{ksat=1}^{N_{sat}} \left( \sqrt{(X_s(T_e, k_{sat}) - X_u)^2 + (Y_s(T_e, k_{sat}) - Y_u)^2 + (Z_s(T_e, k_{sat}) - Z_u)^2} - \rho_{ksat} - \Delta T \right)^2$$

Les techniques de minimisation à mettre en oeuvre sont des techniques non linéaires, connues en soi, du type Newton ou autre.

Selon un autre mode de réalisation, et de manière symétrique, l'étape de minimisation de ladite fonction $f$ s'établit sur la date de réception $T_r$ des signaux de positionnement en lieu et place de la date d'émission $T_e$.

Cette technique peut être mise en oeuvre soit par les moyens de calcul du mobile soit par les moyens de calcul du serveur.

On notera, en outre, que la description de l'invention a mis l'accent sur les différentes étapes du procédé selon l'invention, cependant il est évident que les différents éléments mis en oeuvre dans ce procédé comportent les moyens nécessaires à la réalisation de l'invention, ainsi le mobile et le serveur comportent, outre les moyens de calcul cités ci-dessus, respectivement des moyens de communication pour l'échange de signaux entre le mobile et le serveur, des moyens de réception des signaux de positionnement (GPS, GNSS, etc). En plus, le mobile comporte des moyens d'émission des phases de code et le serveur comporte des moyens de réception desdites phases de code.

Notamment, l'invention a été décrite dans le cadre d'un système GPS mais il peut d'agir d'un autre système GNSS tel qu'un système du type GLONASS ou GALILEO.

## Revendications

1.  Procédé de calcul de position (ou de point) d'un dispositif mobile, le procédé mettant en oeuvre :

    - un serveur de données d'assistance pour fournir une aide à la résolution du point du dispositif mobile,
    - ledit dispositif mobile comportant des moyens de communication avec le serveur par l'intermédiaire d'un réseau de radio-téléphonie cellulaire, ledit dispositif comprenant des moyens de réception de signaux de positionnement provenant d'un système de positionnement par satellites (GPS, GNSS) utilisant une technique d'accès à spectre étalé,

    le procédé comportant les étapes suivantes :

    - suite à la réception des signaux de positionnement, le dispositif envoie au serveur un ensemble de phases de code d'étalement correspondant aux satellites acquis, ces phases de code étant datées par une seule information de date correspondant à l'heure d'émission d'une des phases de code,
    - le serveur déduit de ces informations les heures d'émission correspondant à ces phases de code ainsi que les pseudo-distances,
    - le serveur résout le point.

2.  Procédé de calcul de position (ou de point) d'un dispositif mobile, le procédé mettant en oeuvre :

    - un serveur de données d'assistance pour fournir une aide à la résolution du point du dispositif mobile,
    - ledit dispositif mobile comportant des moyens de communication avec le serveur par l'intermédiaire d'un réseau de radio-téléphonie cellulaire, ledit dispositif comprenant des moyens de réception de signaux de positionnement provenant d'un système de positionnement par satellites (GPS, GNSS) utilisant une technique d'accès à spectre étalé,

le procédé comportant les étapes suivantes :

- ledit dispositif mobile envoie au serveur un ensemble de phases de code correspondant aux satellites acquis, ces phases de code étant mesurées par rapport au début de tranches de milliseconde entretenues par une horloge locale, les phases de code étant datées par rapport à une heure d'émission,
- le serveur déduit de ces phases de code et de l'heure d'émission associée les pseudo-distances,
- le serveur calcule la position dudit dispositif mobile.

3. Procédé de calcul de position (ou de point) d'un dispositif mobile, ledit dispositif comprenant des moyens de réception de signaux de positionnement provenant d'un système de positionnement par satellites (GPS, GNSS) utilisant une technique d'accès à spectre étalé, **caractérisé en ce que**, pour éviter de lire la date d'émission $T_e$ sur les signaux de positionnement, il est effectué une minimisation, par une technique non linéaire, de la fonction suivante :

$$f(X_u, Y_u, Z_u, \Delta T, T_e) = \sum_{ksat=1}^{N_{sat}} \left( \begin{array}{l} \sqrt{(X_s(T_e, k_{sat}) - X_u)^2 + (Y_s(T_e, k_{sat}) - Y_u)^2 + (Z_s(T_e, k_{sat}) - Z_u)^2} \\ - \rho_{ksat} - \Delta T \end{array} \right)^2$$

où Xu,Yu,Zu représente la position du dispositif mobile,
ΔT représente l'erreur d'horloge commise sur la mesure de pseudo-distance,
$T_e$ représente la date d'émission des signaux de positionnement.

4. Procédé selon la revendication 3, **caractérisé en ce que** l'étape de minimisation de ladite fonction *f* s'établit de manière symétrique sur la date de réception $T_r$ des signaux de positionnement en lieu et place de la date d'émission $T_e$.

5. Procédé selon la revendication 3 ou 4, **caractérisé en ce que** l'étape de minimisation est réalisée par des moyens de calcul du dispositif mobile.

6. Procédé selon la revendication 3 ou 4, **caractérisé en ce que**, le procédé mettant en oeuvre :

- un serveur de données d'assistance pour fournir une aide à la résolution du point du dispositif mobile,
- ledit dispositif mobile comportant des moyens de communication avec le serveur par l'intermédiaire d'un réseau de radio-téléphonie cellulaire,

l'étape de minimisation dudit procédé est réalisée par des moyens de calcul du serveur.

# FIG_1

Phase de code du sat 1

Horloge
système
GPS

⟨ 200 ⟩ 201 ⟩ 202 ⟩ 203 ⟩ 204 ⟩ 205 ⟩ 206 ⟩ 207 ⟩

Nchips 1=0

SV Observ. #1
Temps tsv_1

⟨ 139 ⟩ 140 ⟩ 141 ⟩ 142 ⟩ 143 ⟩ 144 ⟩ 145 ⟩ 146 ⟩

SV Observ. #2
Temps tsv_2

⟨ 128 ⟩ 129 ⟩ 130 ⟩ 131 ⟩ 132 ⟩ 133 ⟩ 134 ⟩ 135 ⟩

Phase de code de sat

SV Observ #nsat
Temps tsv_nsat

⟨ 132 ⟩ 133 ⟩ 134 ⟩ 135 ⟩ 136 ⟩ 137 ⟩ 138 ⟩ 139 ⟩

Phase de code de sat n

# FIG_2

GPS TOW = 142 = GPS
Tow lu sur un satellite

Nchips_1=0

SV Observ. #1
Temps tsv_1

⟨ 139 ⟩ 140 ⟩ 141 ⟩ 142 ⟩ 143 ⟩ 144 ⟩ 145 ⟩ 146 ⟩

SV Observ. #2
Temps tsv_2

⟨ 128 ⟩ 129 ⟩ 130 ⟩ 131 ⟩ 132 ⟩ 133 ⟩ 134 ⟩ 135 ⟩

Nchips_2

SV Observ. #nsat
Temps tsv_nsat

⟨ 132 ⟩ 133 ⟩ 134 ⟩ 135 ⟩ 136 ⟩ 137 ⟩ 138 ⟩ 139 ⟩

Nchips_nsat

# FIG_3

[15] Phase de code, sat1 [16]

[20] TOW=142

Phase de code sat 2 [21]

1ms

Horloge locale

[17]
SV Observ.#1 Temps tsv_1
139 140 141 142 143 144 145 146

[18]
SV Observ. #2 Temps tsv_2
137 138 139 140 141 142 143 144

[19]
SV Observ.=nsat Time tsv_nsat
137 138 139 141 142 143 144 145

Phase de code satelliteN [22]

# FIG_4

[23]

[27] Phase de code sat 1 [28]

Horloge locale du récepteur
200 201 202 203 204 205 206 207

Nchips_1=0

[24]
SV Observ. #1 Temps tsv_1
139 140 141 142 143 144 145 146

[25]
SV Observ. #2 Temps tsv_2
128 129 130 131 132 133 134 135

Phase de code du sat n [29]

[26]
SV Observ. #nsat Temps tsv_nsat
132 133 134 135 136 137 138 139

[30]
Phase de code du sat n